Europäisches Patentamt

European Patent Office

Office européen des brevets

(19)

(11) Numéro de publication: **0 250 346**
**B1**

(12) **FASCICULE DE BREVET EUROPEEN**

(45) Date de publication du fascicule du brevet:
02.05.90

(21) Numéro de dépôt: 87420163.5

(22) Date de dépôt: 15.06.87

(51) Int. Cl.⁴: **B01D 71/02**, B01D 67/00,
C04B 35/52, C04B 41/50

(54) Procédé de fabrication d'une membrane minérale poreuse sur un support minéral.

(30) Priorité: 19.06.86 FR 8609553

(43) Date de publication de la demande:
23.12.87 Bulletin 87/52

(45) Mention de la délivrance du brevet:
02.05.90 Bulletin 90/18

(84) Etats contractants désignés:
AT BE CH DE GB IT LI LU NL SE

(56) Documents cités:
EP-A- 0 092 840
CH-A- 604 826
FR-A- 2 110 123
FR-A- 2 182 842
FR-A- 2 186 428
US-A- 4 060 488
US-A- 4 500 328

Le dossier contient des informations techniques
présentées postérieurement au dépôt de la demande et
ne figurant pas dans le présent fascicule.

(73) Titulaire: LE CARBONE LORRAINE, Tour Manhattan - La
Défense 2, 5-6, place de l'Iris,, F-92400 Courbevole(FR)

(72) Inventeur: Desmicht, Denis, 3, rue Albert Robert,
F-54530 Pagny Sur Moselle(FR)
Inventeur: Bontems, Maurice, 343, rue de Pont à
Mousson, F-57158 Montigny Les Metz(FR)
Inventeur: Bauer, Jean-Michel, 28, rue Jules Ferry,
F-54530 Pagny Sur Moselle(FR)
Inventeur: Verna, Maurice Château St Anne Bâtiment
Edelweiss, 30/34 avenue de Fabron, F-06200 Nice(FR)
Inventeur: Mollet, Serge, 4, rue St Nicolas,
F-54530 Pagny Sur Moselle(FR)
Inventeur: Maire, Jacques, 10, rue du Jourdain,
F-75020 Paris(FR)

(74) Mandataire: Séraphin, Léon et al, PECHINEY 28, rue de
Bonnel, F-69433 Lyon Cedex 3(FR)

ACTORUM AG

## Description

DOMAINE TECHNIQUE DE L'INVENTION

La présente invention est relative à un procédé de fabrication de membranes minérales poreuses et perméables sur des supports poreux et perméables, membranes destinées à être utilisées en techniques séparatives et, plus particulièrement en microfiltration et ultrafiltration. Par membranes minérales, on entend essentiellement des membranes carbonées ou en matériau céramique.

ETAT DE LA TECHNIQUE

Parmi les techniques séparatives, la microfiltration, l'ultrafiltration voire l'osmose inverse, ont recours le plus souvent à des membranes organiques qui doivent être maintenues mécaniquement sur un support. De plus, ces membranes restent relativement fragiles à la corrosion et à la température.

Pour résoudre ce problème, on a vu apparaître, depuis quelque temps, sur le marché, des supports céramiques asymétriques ou en carbone homogène. Pour que ces supports soient utilisables en ultrafiltration, voire en microfiltration, il faut procéder au dépôt d'une membrane, à base de poudre céramique (zircone, alumine, titane, argile, etc.). Les techniques sont connues. Elles consistent soit à procéder par sol-gel, soit par engobe d'une émulsion défloculée. La tenue de la membrane ainsi déposée est obtenue par frittage thermique des grains de céramique.

Ainsi, le brevet suisse n° 604 826 décrit un procédé de fabrication de membrane comprenant la préparation d'un mélange homogène d'une poudre frittable dans un liant organique éliminable par chauffage, l'application de ce mélange par aspiration au travers de la surface interne d'un support céramique ou métallique, la compression du support ainsi revêtu et l'élimination au moins partielle du liant organique, de préférence entre 150 et 400°C.

Ces céramiques, malgré leur bonne tenue thermique, ne répondent pas toujours aux critères requis de tenue à la corrosion et/ou de compatibilité alimentaire.

Il est, par ailleurs, connu que le carbone a une résistance thermique et chimique excellente et une compatibilité alimentaire reconnue.

Toutefois, s'il est possible de déposer des émulsions de produit carboné sur un support poreux, ce produit ne peut être fritté.

OBJET DE L'INVENTION

Un des buts de l'invention est de surmonter cet inconvénient pour obtenir une membrane carbonée mécaniquement solide et dont la texture peut, de plus, être ajustée.

Un autre but de l'invention est d'obtenir une membrane en matériau céramique mécaniquement solide et dont la texture peut, de plus, être ajustée par un procédé ne faisant pas appel au frittage.

Ces buts sont atteints selon le procédé conforme à l'invention qui consiste en un procédé de fabrication d'une membrane poreuse et perméable sur support minéral poreux et perméable, caractérisé en ce que l'on dépose par engobage sur ledit support au moins une couche d'une émulsion stable de particules minérales dans un soluté contenant une résine thermodurcissable choisie pour laisser après cokéfaction un taux de coke suffisant pour assurer la tenue du dépôt et que l'on soumet la résine à un traitement de polycondensation puis de cokéfaction, le coke formé assurant à la fois la liaison mécanique des particules minérales entre elles, et entre elles et le support.

Les particules minérales peuvent être:

– en carbone, le mot carbone étant pris dans un sens large et pouvant désigner du coke, du noir, du graphite, etc.

– en matériau céramique tel que carbure de silicium, nitrure de silicium, oxyde de titane, de zirconium, etc.

Les particules minérales peuvent être sous forme de grains ou de fibres de petites dimensions telles que des trichites.

Leurs dimensions sont choisies en fonction de la texture recherchée pour la membrane.

La résine thermodurcissable peut, par exemple, être une résine phénolique ou toute résine laissant après cokéfaction un taux de coke suffisant pour assurer la tenue du dépôt.

Les émulsions utilisées peuvent être de type "engobe", c'est-à-dire des émulsions défloculées dans un agent approprié.

Par exemple, on mélange vigoureusement les particules dans un alcool polyvinylique additionné d'un agent défloculant, tel qu'un sel d'ammonium. On ajoute à ce mélange la résine thermodurcissable devant servir à l'agglomération des particules. Après dépôt de cet engobe sur le support, il y a floculation, ce qui, après séchage, assure à la couche ainsi déposée une continuité et une épaisseur régulière. L'ensemble de cette technique est appelé "engobage".

On peut également utiliser pour l'émulsion une "pâte mère" de peinture à base de particules minérales; l'émulsion se fait dans un soluté contenant la résine thermodurcissable. Dans ce cas, le dépôt sur le support se fait par enduction.

Dans tous les cas, la résine est soumise à un traitement de polycondensation suivi d'un traitement de cokéfaction entre 400 et 3000°C.

Le support poreux perméable peut être en matériaux divers résistant aux températures de cokéfaction de la résine : carbone au sens large, céramique, etc...

Le support peut être avantageusement en carbone et les particules en carbone. Par exemple, on peut choisir pour le support un carbone polygranulaire ou un composite fibres de carbone/matrice carbone. Dans ce cas, on obtient un élément filtrant tout carbone, donc ayant toutes les propriétés inhérentes au carbone et par conséquent utilisable dans de nombreux domaines.

Le procédé de fabrication conforme à l'invention permet d'obtenir, à volonté, une membrane adhérente à son support et de texture ajustée à son utilisation. En effet, suivant la texture du support, on peut déposer successivement des couches d'émulsion de particules minérales de granulométries différentes dans chaque couche, en commençant par les particules les plus grosses. Dans ce cas, entre chaque dépôt de couche, il est inutile de cokéfier, une polycondensation ménagée suffit, la cokéfaction se faisant lorsque toutes les couches sont déposées. On obtient ainsi une membrane composite asymétrique sélective et de forte perméabilité.

Il est à noter que, pour ajuster la texture, on pourrait imprégner le support avec un imprégnant approprié, mais un tel procédé conduit à un matériau homogène, certes sélectif mais peu perméable. On voit ainsi la supériorité du procédé conforme à l'invention.

Dans le cas où le support a une texture relativement lâche, le nombre de couches déposées pour obtenir la membrane de texture souhaitée peut être largement diminué si la première couche est réalisée avec une émulsion d'un matériau fibreux. Ce matériau fibreux peut avantageusement être constitué de trichites en carbone ou en matériau céramique tel que carbure de silicium, nitrure de silicium, etc... En effet, sur un support de texture lâche, il faut appliquer une succession de couches de particules minérales de granulométrie décroissante dont la première est relativement grosse pour éviter le "poinçonnage" ou pénétration dans le support. Un dépôt avec une émulsion contenant un matériau fibreux se comporte comme un non-tissé ne réduisant pas la perméabilité du support et sert de support aux couches suivantes contenant des particules de granulométrie fine.

Le procédé de fabrication propre à l'invention permet d'obtenir une membrane sur des supports de géométrie variable : plaque, tube, pièces de forme. Il est particulièrement bien adapté pour le dépôt de membranes à l'intérieur de supports tubulaires.

Il est à noter aussi que si, pour des raisons de textures ou de coût, on veut déposer sur le support des couches de natures différentes (par exemple, une couche contenant des trichites de carbure de silicium, puis une ou plusieurs couches contenant de la poudre de carbone) le procédé de fabrication propre à l'invention le permet.

## EXEMPLES D'APPLICATION

Les exemples suivants, donnés à titre indicatif et non limitatif, illustrent l'invention.

## Exemple 1

Le support est un composite fibres de carbone/matrice carbone de perméabilité à l'air 200 000 $cm^3.s^{-1}.m^{-2}.bar^{-1}$, et de diamètre de pore moyen de 30 μm.
On réalise sur ce support un engobage, c'est-à-dire le dépôt d'un engobe tel que défini précédemment, cet engobe étant constitué d'une émulsion de particules de coke de 4 μm, et la résine thermodurcissable étant une résine phénolique. Après polycondensation et cokéfaction de la résine, on obtient une membrane de perméabilité à l'air de 120 000 $cm^3.s^{-1}.m^{-2}.bar^{-1}$, et de diamètre de pore moyen de 20 μm.

## Exemple 2

Le support est le même que celui de l'exemple 1
On réalise sur ce support deux engobages successifs avec des émulsions contenant des particules de carbone de granulométries différentes :
- la première contient des particules de coke de 4 μm,
- la seconde contient des particules de noir de carbone de 0,1 μm, la résine thermodurcissable étant une résine phénolique. Chaque engobage est suivi d'une polycondensation de la résine. Après cokéfaction finale, on obtient une membrane de perméabilité à l'air de 50 000 $cm^3.s^{-1}.m^{-2}.bar^{-1}$, et de diamètre de pore moyen de 1 à 5 μm.

## Exemple 3

Le support est le même que celui de l'exemple 1.
On réalise sur ce support un engobage avec une émulsion contenant des fibrettes de carbone (diamètre 7 μm - longueur 0,2 mm), la résine thermodurcissable étant une résine phénolique. Après polycondensation et cokéfaction de la résine, on obtient une membrane ayant la même perméabilité à l'air, identique à celle du support, et de diamètre de pore moyen de 12 μm.

Une telle membrane peut être soit utilisée directement dans des opérations de filtration ou recevoir comme dans l'exemple 2 un dépôt de particules de noir de carbone de 0,1 μm qui abaissent la perméabilité à 50 000 $cm^3.s^{-1}.m^{-2}.bar^{-1}$ et le diamètre de pore moyen à 5 μm.

Les membranes réalisées selon ces 3 exemples peuvent être utilisées en microfiltration ou comme supports pour recevoir une nouvelle couche d'engobe et être ajustées en sélectivité pour une utilisation en ultrafiltration.

## Exemple 4

Le support est un support céramique en alumine de perméabilité 10 000 $cm^3.s^{-1}.m^{-2}.bar^{-1}$ et de diamètre de pore moyen de 10 μm.
On réalise sur ce support un engobage avec émulsion contenant des trichites de carbure de silicium, la résine thermodurcissable étant une résine phénolique.
Après polycondensation et cokéfaction de la résine, on obtient un média poreux asymétrique utilisable en microfiltration, de perméabilité élevée.

## Revendications

1. Un procédé de fabrication d'une membrane poreuse et perméable sur support minéral poreux et perméable, caractérisé en ce que l'on dépose par engobage sur ledit support au moins une couche d'une émulsion stable de particules minérales dans un soluté contenant une résine thermodurcissable choisie pour laisser après cokéfaction un taux de coke suffisant pour assurer la tenue du dépôt et que l'on soumet la résine à un traitement de polycondensation puis de cokéfaction, le coke formé assurant à la fois la liaison mécanique des particules minérales entre elles, et entre elles et le support.

2. Procédé selon la revendication 1, caractérisé en ce que le matériau constituant les particules minérales est choisi parmi les matériaux en carbone ou en céramique.

3. Procédé selon la revendication 1 ou la revendication 2, caractérisé en ce que les particules sont sous forme de grains ou de fibres de petites dimensions, telles que des trichites.

4. Procédé selon l'une quelconque des revendications précédentes, caractérisé en ce que l'émulsion est du type engobe et est obtenue en mélangeant les particules minérales dans un alcool polyvinylique additionné d'un agent défloculant tel qu'un sel d'ammonium, et que l'on ajoute à ce mélange une résine thermodurcissable.

5. Procédé selon l'une quelconque des revendications précédentes caractérisé en ce que l'on dépose sur un support poreux et perméable, plusieurs couches d'émulsions stables de particules minérales dans un soluté contenant une résine thermodurcissable, que l'on soumet la résine à un traitement de polycondensation après le dépôt de chaque couche et qu'enfin, on cokéfie la résine polycondensée de toutes les couches.

6. Procédé selon la revendication 5, caractérisé en ce que les particules minérales des émulsions ont une granulométrie différente d'une couche à l'autre, et allant en décroissant à partir du support.

7. Procédé selon la revendication 5 ou la revendication 6, caractérisé en ce que les particules minérales des émulsions sont en matériaux différents d'une couche à l'autre.

8. Procédé selon l'une quelconque des revendications précédentes, caractérisé en ce que le support minéral est en carbone.

9. Procédé selon la revendication 8 caractérisé en ce que le carbone du support est choisi parmi les carbones polygranulaires et les composites fibres de carbone-matrice carbone.

10. Procédé selon l'une quelconque des revendications 1 à 7, caractérisé en ce que le support minéral est en céramique.

11. Membrane minérale caractérisée en ce qu'elle est obtenue selon le procédé revendiqué dans l'une quelconque des revendications précédentes.

## Patentansprüche

1. Verfahren zur Herstellung einer porösen und permeablen Membran auf porösem und permeablen mineralischem Träger, dadurch gekennzeichnet, daß man durch Engobierung auf dem Träger wenigstens eine Schicht einer stabilen Emulsion mineralischer Teilchen in einer Lösung abscheidet, die ein wärmehärtbares Harz enthält, das zum Übriglassen eines zur Sicherung der Haltbarkeit der Abscheidung ausreichenden Koksanteils nach der Verkokung ausgewählt ist, und daß man das Harz einer Polykondensations- und danach Verkokungsbehandlung unterwirft, wobei der gebildete Koks gleichzeitig die mechanische Bindung der mineralischen Teilchen untereinander sowie zwischen ihnen und dem Träger sichert.

2. Verfahren nach dem Anspruch 1, dadurch gekennzeichnet, daß das die mineralischen Teilchen darstellende Material unter den Kohlenstoff- oder Keramikmaterialien gewählt wird.

3. Verfahren nach dem Anspruch 1 oder dem Anspruch 2, dadurch gekennzeichnet, daß die Teilchen in Form von Körnern oder von Fasern kleiner Abmessungen, wie z.B. Trichiten, sind.

4. Verfahren nach irgendeinem der vorstehenden Ansprüche, dadurch gekennzeichnet, daß die Emulsion vom Engobetyp ist und erhalten wird, indem man die mineralischen Teilchen in einem Polyvinylalkohol einmischt, dem ein Entflockungsmittel, wie z.B. ein Ammoniumsalz, zugesetzt ist, und daß man dieser Mischung ein wärmehärtbares Harz zusetzt.

5. Verfahren nach irgendeinem der vorstehenden Ansprüche, dadurch gekennzeichnet, daß man auf einem porösen und permeablen Träger mehrere Schichten von stabilen Emulsionen mineralischer Teilchen in einer ein wärmehärtbares Harz enthaltenden Lösung abscheidet, daß man das Harz einer Polykondensationsbehandlung nach der Abscheidung jeder Schicht unterwirft und daß man schließlich das polykondensierte Harz aller Schichten verkokt.

6. Verfahren nach dem Anspruch 5, dadurch gekennzeichnet, daß die mineralischen Teilchen der Emulsionen eine Korngröße haben, die von einer Schicht zur anderen verschieden ist und vom Träger aus abnehmend verläuft.

7. Verfahren nach dem Anspruch 5 oder dem Anspruch 6, dadurch gekennzeichnet, daß die mineralischen Teilchen der Emulsionen aus von einer Schicht zur anderen verschiedenen Materialien sind.

8. Verfahren nach irgendeinem der vorstehenden Ansprüche, dadurch gekennzeichnet, daß der mineralische Träger aus Kohlenstoff ist.

9. Verfahren nach dem Anspruch 8, dadurch gekennzeichnet, daß der Kohlenstoff des Trägers unter den vielkörnigen Kohlenstoffen und den Kohlenstoffaser-Kohlenstoffmatrix-Verbundmaterialie gewählt wird.

10. Verfahren nach irgendeinem der Ansprüche 1 bis 7, dadurch gekennzeichnet, daß der mineralische Träger aus Keramik ist.

11. Mineralische Membran, dadurch gekennzeichnet, daß sie nach dem in irgendeinem der vorstehenden Ansprüche beanspruchten Verfahren enthalten ist.

## Claims

1. A process for producing a porous, permeable membrane on a porous, permeable mineral support characterised by depositing on said support by the application of a slip at least one layer of a stable emulsion of mineral particles in a solute containing a thermosetting resin selected to leave after coking a proportion of coke sufficient to ensure retention of the deposit, and further characterised by subjecting the resin to a polycondensation and then coking treatment, the coke formed ensuring both mechanical connection of the mineral particles to each other, and to the support.

2. A process according to claim 1 characterised in that the material forming the mineral particles is selected from carbon or ceramic materials.

3. A process according to claim 1 or claim 2 characterised in that the particles are in the form of grains or fibres of small dimensions such as trichites.

4. A process according to any one of the preceding claims characterised in that the emulsion is of the slip type and is obtained by mixing the mineral particles in a polyvinyl alcohol with the addition of a deflocculating agent such as an ammonium salt, and that a thermosetting resin is added to said mixture.

5. A process according to any one of the preceding claims characterised by depositing on a porous, permeable support, a plurality of layers of stable emulsions of mineral particles in a solute containing a thermosetting resin, subjecting the resin to a polycondensation treatment after the deposit of each layer, and finally coking the polycondensed resin of all the layers.

6. A process according to claim 5 characterised in that the mineral particles of the emulsions are of a different granulometry from one layer to another, decreasing from said support.

7. A process according to claim 5 or claim 6 characterised in that the mineral particles of the emulsion are of different materials from one layer to another.

8. A process according to any one of the preceding claims characterised in that the mineral support is of carbon.

9. A process according to claim 8 characterised in that the carbon of the support is selected from polygranular carbons and carbon fibre-carbon matrix composites.

10. A process according to any one of claims 1 to 7 characterised in that the mineral support is of ceramic.

11. A mineral membrane characterised in that it is obtained by the process claimed in any one of the preceding claims.